# EUROPEAN PATENT APPLICATION

(11) **EP 4 516 496 A1**
(43) Date of publication of application: **05.03.2025**
(21) Application number: 23194915.7
(22) Date of filing: 01.09.2023
(51) Int. Cl.: B29D 11/00

(54) **METHOD FOR TINTING A SPECTACLE LENS**

(71) Applicant: Carl Zeiss Vision International GmbH, 73430 Aalen (DE)
(72) Inventor: WEIS, Philipp, 73430 Aalen (DE); SHARIFI, Hamed, 73430 Aalen (DE); LIU, Yujing, 73430 Aalen (DE); KARIM, Waiz, 73430 Aalen (DE)
(74) Representative: Carl Zeiss AG - Patentabteilung

(57) **Abstract**

The present invention provides a method configured for tinting a spectacle lens (1) by applying a tinting solution at least to a first area (50) of a surface the spectacle lens, wherein the surface of the spectacle lens comprises a second area (10) which has been subject to an irradiation, characterized in that at least the second area (10) of the surface having been uncoated when the irradiation is provided.

## Description

The present invention relates to tinting of a spectacle lens. In particular, the present invention relates to a method configured for tinting a spectacle lens by selectively irradiating a preselected part of an uncoated surface of the spectacle lens. Further, the present invention is also directed to a corresponding device, computer program, and computer-readable storage medium data.

Tints for spectacle lenses are required for many reasons including medical and safety reasons. There has been a need to effectively tint only a selected part of a surface of a spectacle lens such as patterns representing a mark, moreover, a small mark such as a number, a letter, a small shape, etc.

Selectively tinting spectacle lenses up to now has been achieved by designing and applying a masking means such as adhesive tape or thin films to cover a part of a lens surface not desired to be tinted and then immersing the lens in a bath comprising a dye. However, this method has disadvantages of poor reproducibility and homogeneity.

To be specific, the conventional method using an adhesive tape has drawbacks of infiltration of undesired materials beneath the masked part of the lens during the immersion of the lens into a tinting bath, especially when tinting on the curved surface of the spectacle lens (both concave and convex sides). Wrinkles are easily formed on the edges of the tapes, as the tape, of which the shape is mostly flat and cannot reflect the curvature, has to be applied onto the curved surfaces of the spectacle lens. As the tape is manually applied to the lenses, this applicability of the conventional method on the curved surfaces of the spectacle lens may even be worsen or differ depending on skill of an operator who aligns the tape on the spectacle lens.

Moreover, the larger the curved portion of the spectacle lens needs to be masked is, the poorer the adhesion between the tape and the spectacle lens gets. The wrinkles are formed on the tape and cause water infiltration, leading to inhomogeneous tinting with blurred edges of the pattern, eventually color stains. Hence on spectacle lenses having high curvatures, it was difficult to obtain a desired tinting with a good quality using the conventional method using tape masking.

Further, the conventional selective tinting method was only able to provide limited tinting patterns. For example, the method most commonly used for realizing a tinting pattern is a die-cutting process whereby a die is used to cut an adhesive tape on a die press to prepare the tape into a desired form. However, the die-cutting process does not allow the realization of patterns with a small size or complicated patterns because there the small-sized tape could easily break during the die-cutting or tape applying step. In addition, small size of masking tapes may be prone to tinting infiltrations as well or may be easily damaged. Moreover, as a step of applying the die-cut tape to a spectacle lens is manually done, a tape with a shape which is not connected to a lens edge (side) is difficult to be realized as aligning the tape to a plurality of lenses on the exact same position cannot be easily repeated with precision by using hands. Said process therefore required a high degree of manual labor and the result thereof is significantly affected by the person who conducts the process.

As such, the conventional method is inefficient and even not suitable for tinting selective, complex, and/or small patterns on spectacle lenses.

To improve the tinting of ophthalmic lenses, US 9677222B2 discloses a method for tinting a substrate selectively between different portions of the lens substrate surface by using two different surface materials. Here, a substrate having a first surface portion formed by a first material and a second surface portion formed by a second material is used, wherein the first and the second materials are different. The dye source is penetrated only into the first surface portion with the first material by heating but not into the second surface with the second material. This exploits the differences between the gelation or softening temperature of the different materials. However, as the additional step of forming two different surface portions on the respective spectacle lens with different surface and delicate adjustment of heating temperature are necessary, there is still a need to improve the tinting process. Further, with said process, it may not be easy to obtain a high-quality tinting due to the insufficient differences between the properties of the two surface materials.

There also have been approaches applying an ink receptor layer on the lens substrate in a form of a thin film. JP 3075403 describes a method of producing a tinted plastic lens by applying a hardening coating and an ink aqueous solution containing disperse dyes onto the hardening coating to a spectacle lens, by means of an ink jet printer, heat treating, and finally removing, by rinsing, and lastly, by the water-soluble polymer coating. WO 2006/079564 A1 proposes a simplified process which coats the substrate of an optical lens with a layer of an ink receptor material capable of forming a porous ink receptor film, evaporates solvents present in the ink receptor material to form the porous film, applies an ink solution using an inkjet machine on the porous film in such conditions that the ink solution is absorbed within the film, heats the optical lens until the substrate has attained the desired tint, and then removes the ink receptor film. As such, for these methods, auxiliary layers must be applied onto the lens. It is especially difficult to get a transparent coating and thin film coating without haze and the application and adaptation of auxiliary layer may adversely affect the lens property. Moreover, the necessary additional process steps related thereto can be cumbersome and inefficient.

EP 3 266 598 A1 appears to be the closest prior art and discloses a process for marking of optical eyeglasses. During a first step, an area of the optical eyeglass is treated by a laser beam to remove a surface coating comprising hydrophobic and oleophobic coatings having the property of being antismudge coatings, which are not favorable to adhesion of the deposited ink. Thereafter, an ink is deposited on the detreated zone in order to form the inked pattern, for example by inkjet printing. By this process, a surface coating which prevents the ink from adhering is locally removed until a layer of the ophthalmic lens having properties is reached, allowing the ink to be retained in the surface of the spectacle lens. Disadvantageously, this method is applied to an optical eyeglass with a further coating similar to the prior art mentioned above. Therefore, there is still a need for a new selective tinting method which can provide a desired tinted pattern in an industrially effective and simple way and with high quality and precise pattern.

It is therefore an object of the present invention to provide an improved method suitable for selectively tinting a specific part of a surface of a spectacle lens.

The present invention solved this problem using irradiation, in particular, using irradiation as a replacement of a physical mask.

With the present invention, said need for obtaining sophisticated and high-quality tinting in a more easily applicable and reproducible manner has been achieved. Accordingly, on one hand, as compared to the adhesive tape tinting method or the other tinting method where a physical mask is indispensable, the present invention provides the spectacle lenses with a high-quality tinting with cost efficiency and flexibility in reproductivity. On the other hand, as compared to the methods using auxiliary thin film layers for tinting or additional treatments or additional coatings, the present invention enables tinting in easily applicable and reproducible manner together with a tinting with high quality, without impairing the lens properties.

By using irradiation for selectively tinting spectacle lenses and delicately adjusting the surface properties of spectacle lenses, the inventors overcame the drawbacks of the prior art.

The present method selectively irradiates a preselected part of an uncoated surface of a spectacle lens so that the preselected part irradiated is only partially tinted or is not tinted at all in a subsequent tinting step. The degree of tinting will depend on the irradiation condition and/or parameters. In contrast, the parts of the surface of the spectacle lens which is not irradiated is fully tinted in the subsequent tinting step. As a result, the preselected part will be tinted differently from the parts other than the preselected part. The inventors found out that the irradiation alters the surface properties of the spectacle lens so that selective tinting is allowed. By irradiation, the exposed surface of the spectacle lens is changed in a way that tinting thereon with a tinting solution is partially or fully inhibited depending on the irradiation condition.

Further, using irradiation as a sort of a mask or a means for inhibiting tinting in a subsequent tinting step is particularly suitable for a highly curved spectacle lens. In general, a distance between a spectacle lens surface and a mask may significantly affect the sharpness and quality of the tinting. The present method may adjust the irradiation parameters in consideration of a 3D surface pattern of a surface of a spectacle lens (i.e., base curve and curvature of a spectacle lens). By applying different irradiation parameters in consideration of a 3D surface pattern of a spectacle lens, for example, applying irradiation source from a different height from a surface of a spectacle lens, a desired pattern with a high quality can be achieved. In contrast, in a conventional method where a physical mask for tinting is required, a new mask needs to be manufactured for each of the spectacle lenses as each of the spectacle lenses would have different 3D surface pattern.

Furthermore, with the present method, a highly selective application of the tinting solution to the surface of the spectacle lens can be achieved, while altering only an extremely thin region of the preselected surface of the spectacle lens. With the present method, it was surprisingly found that the necessary surface properties of a spectacle lens are not substantially changed or damaged.

Irradiation can induce cross-linking on the surface, leading to physical tightening of the exposed lens surface, thereby inhibiting a tinting solution from entering the preselected part of the surface of the spectacle lens and resulting the preselected part to be only partially tinted or not tinted at all.

Throughout this specification the following definitions apply:
A spectacle lens is an ophthalmic lens worn in front of, but not in contact with, the eyeball (DIN ISO 13666:2019, section 3.5.2), where an ophthalmic lens is a lens intended to be used for purposes of measurement, correction and/or protection of the eye, or for changing its appearance (DIN ISO 13666:2019, section 3.5.1). Non-limiting examples of a spectacle lens include corrective and non-corrective spectacle lenses, including single vision or multi-vision lenses, which may be either segmented or non-segmented, as well as other elements used to correct, protect, or enhance vision, magnifying lenses and protective lenses or visors such as found in spectacles, glasses, goggles and helmets. Especially, a spectacle lens is a lens which is designed to fit a spectacles frame so as to protect the eye and/or correct the sight and can be a non-corrective (also called plano or afocal lens, for example for sunglasses, sport-specific eyeglasses or for filtering particular wavelengths) or corrective ophthalmic lens. Corrective lens may be a unifocal, a bifocal, a trifocal or a progressive lens. Accordingly, in general, in the context of the invention, the term "lens" or "lenses" refers to any of the above spectacle lenses.

The spectacle lens of the present invention may be a spectacle lens of which at least one of the surfaces is not coated, i.e., a spectacle lens substrate. The term "spectacle lens substrate" refers to a piece of optical material that is used during the manufacturing process of a spectacle lens, i.e., precursors of the finished spectacle lens. Suitable precursors of the finished spectacle lens are for example semi-finished lens blanks, wherein the term "semi-finished lens blank" refers to a piece of optical material with one optically finished surface for the making of a spectacle lens (DIN ISO 13666:2019, section 3.8.1). In any case, the spectacle lens substrate as used herein has at least one surface without coatings such as AR (anti-reflective)- or HC (hard coat)-coatings which is to be used in the method described herein.

A spectacle lens substrate comprising any conventional and known optical material can be used for the present method. The optical material is defined according to section 3.3.1 of DIN EN ISO 13666:2019-12 as transparent material capable of being manufactured into optical components. The spectacle lens substrate may be made of mineral glass according to section 3.3.1 of DIN EN ISO 13666:2019-12 and/or of an organic hard resin such as a thermosetting hard resin according to section 3.3.3 of DIN EN ISO 13666:2019-12; a thermoplastic hard resin according to section 3.3.4 of DIN EN ISO 13666:2019-12; or a photochromic material according to section 3.3.5 of DIN EN ISO 13666:2019-12. For example, the spectacle lens substrate can be made of at least one of the optical materials mentioned in the following table.

**Table: Examples of optical materials**

| Trade name | Optical material |
|---|---|
| CR-39, CR-330, CR-607, CR-630, RAV 700, RAV 7NG, RAV 7AT, RAV 710, RAV 713, RAV 720 | Polyallyldiglycol carbonate ((P)ADC) |
| RAVolution | Polyurea / Polyurethane |
| Trivex | Polyurea / Polyurethane |
| Panlite, Lexan, Makrolon | Polycarbonate (PC) |
| Grilamid, Trogamid, Rilsan | Polyamide (PA) |
| MR-6 | Polythiourethane |
| MR-8 | Polythiourethane |
| MR-7 | Polythiourethane |
| MR-10 | Polythiourethane |
| MR-174 | Polyepisulfide |
| MGC 1.76 | Polyepisulfide |
| Spectralite | Urethane /Methacrylate |
| | Mineral 1.5 |
| | Mineral 1.6 |
| | Mineral 1.7 |
| | Mineral 1.8 |
| | Mineral 1.9 |

The present invention is particularly advantageous due to its applicability to the organic hard resin spectacle lenses, which are, for example, made of polyallydiglycol carbonate, in particular, CR-39.

To the contrary, a "coated spectacle lens" is defined as in ISO 13666:2019(E), section 3.18.1 (coated lens), as a lens (3.5.2) to which one or more surface layers have been added to alter one or more properties of the lens.

The term "surface" or "spectacle lens surface" refers to any layer of the three-dimensional spectacle lens that is in direct contact with the environment. The surface can be regarded as its boundary. The surfaces of a spectacle lens substrate include its front surface, i.e., frontside; side surface, i.e., edge; and back surface, i.e., backside. A front surface of a spectacle lens is defined as in ISO 13666:2019(E), section 3.2.13, as a surface that is intended to be fitted away from the eye. A back surface of a spectacle lens is defined as in ISO 13666:2019(E), section 3.2.14, as a surface which is intended to be fitted nearer to the eye.

The term "surface area" refers to at least one part of a surface or the whole surface of the spectacle lens.

The term "preselected part" indicates a part of a surface of a spectacle lens determined to be only partially tinted or not tinted at all or tinted differently from the non-preselected part. The selection is made prior to as the first step of the present method. There can be at least one preselected part in the present method and tinting of a plurality of the preselected parts can be individually done by individually controlling irradiation condition for each of the preselected parts.

The term a "part (of a surface of a spectacle lens)" means a portion or division of a whole (surface of a spectacle lens) that is separate or distinct. The term "at least (to) a part" may indicate a portion or division of a whole and/or the whole.

The term "tinting" refers to a process of providing a tint to a spectacle lens surface. A tinted spectacle lens is a spectacle lens for which at least a part of the electromagnetic spectrum, for example the illuminant spectrum perceivable by humans (380 - 780 nm) and/or other spectral ranges like the NIR (780 - 3000 nm), UV-A (315 - 380 nm) and UV-B (280 nm - 315 nm) range, is damped due to the addition of a further substance, i.e., not by the polymeric lens material itself. The amount of damping may be, for example, 6 - 99 %. In case of damping within the illuminant spectrum perceivable by humans, this might lead to a luminous transmittance as defined in DIN EN ISO 8930-3:2013 of, for example, 1 - 94 % in tinted lens areas. The luminous transmittance may be further influenced by the subsequent application of coatings, such as AR- or HC-coating. Traditionally, a tint can be obtained by dipping or immersing a substrate in a tinting bath, i.e., a liquid dye solution. The tinted substrate may exhibit a homogenous tint, i.e., a tinted area exhibits the same degree of transmission throughout the tinted area, or the tinted substrate may exhibit a tint gradient, i.e., the degree of transmission changes gradually within the tinted area.

The term "tinting solution" is to be understood as a liquid comprising a tint configured to tint a spectacle lens. The tinting solution may comprise a dye which is a colored substance that makes a lens appear in a certain tint or is used to change the tint of the spectacle lens. Tinting solution may optionally comprise a swelling agent, moderating solution, a surfactant and/or a buffer.

The tinting solution can be converted into a tinting vapor if necessary. The term "aqueous tinting solution" is a tinting solution of which the main solvent is water.

The term "selective tinting" means that tinting is present only at a certain desired part of a surface of a spectacle lens, thereby exhibiting tinted and nontinted surfaces, e.g., in a form of a pattern. In the similar context, the phrase "selectively irradiating" or "selective irradiation" means that irradiation is applied only to a certain desired (preselected) part of a surface of a spectacle lens and the rest of the surfaces are not irradiated. The degree and condition of selective irradiation can be differ depending on the desired pattern.

The term "pattern" refers to any macroscopic element. For example, a selectively (locally) tinted portion of a spectacle lens, a mark, a gradient, a number, a letter of any type of graphic, a graphic representation such as a dot, symbol etc., on a spectacle lens can be deemed as a pattern.

The term "gradient" is particularly used to describe the intensity distribution of a tinting of a lens across a surface of a spectacle lens. In particular, the term "gradient tint" is used to describe a shading of a lens, more particularly a gradually varying intensity of tint on the lens, in a direction parallel to the surface of the spectacle lens, with increasing intensity in a first direction and decreasing intensity in the opposite direction.

The term "irradiation" refers to "light irradiation", the process by which an object, here a surface of a spectacle lens, is exposed to light radiation. Light irradiation can be done by using spatially resolved light such as laser as defined in ISO 11145:2018(E), section 3.19, or high intensity light from a broadband lamp or photonic cure machine. Preferably, the irradiation refers to laser radiation, as defined in ISO 11145:2018(E), section 3.19.4.

According to a first aspect of the present invention, a method being configured for selectively tinting a spectacle lens by applying a tinting solution at least to a first area of a surface the spectacle lens, wherein the surface of the spectacle lens comprises a second area which has been subject to an irradiation, characterized in that at least the second area of the surface having been uncoated when the previous irradiation is provided.

The first area of the surface of the spectacle lens can be a part of the surface of the spectacle lens or the entire surface thereof. For example, the first area can be the front and/or back surface of the spectacle lens. The first area of the surface is the part which is subject to a subsequent tinting step. The second part of the surface can be different from or the same as the first area or can be included in the first area of the surface of the spectacle lens. The first and second surface areas are determined according to a desired pattern to be obtained on the surface of the spectacle lens.

To be specific, the method of the present invention comprises the steps of (i) selectively irradiating a preselected part of an uncoated surface of the spectacle lens (the second area), and (ii) providing a tinting solution at least to a part of the surface of the spectacle lens substrate (the first area).

At the step of selectively irradiating a preselected part of an uncoated surface of a spectacle lens, light irradiation such as a laser is applied only to the preselected part. The irradiated preselected part of the surface of the spectacle lens will be differently tinted or less tinted compared to the non-irradiated parts in a subsequent tinting step, while the remaining, non-irradiated parts of the surface of the spectacle lens (i.e., the surface other than preselected part(s)) will be fully tinted. The term "less tinted" is understood as referring to that the surface is not tinted at all or less tinted (5% to 90% less) compared to the non-irradiated parts of the surface. The degree of tinting will depend on irradiation conditions, i.e., irradiation parameters. The preselected part as well as the irradiation parameters applied to each of the preselected parts will be determined depending on a desired tinting pattern, keeping in mind that the preselected part will not be tinted at all or will be tinted less compared to the non-preselected parts while the rest parts (non-preselected parts) of the surface of the lens spectacle will be fully tinted.

In the present method, irradiation is done on a surface of a spectacle lens having at least one uncoated surface. Specifically, the uncoated surface can be front, side and/or, back surface, meaning that the surface has no coatings at all such as AR (anti-reflective)- or HC (hard coat)-coatings. That is, the instant method can be done without any additional lens coatings or lens layers, This was required for the conventional technology and made the process (for example, laser beam treatment) inefficient and cumbersome. Removing a step of adding coating layers for tinting decreases the investment into coating machinery at the initial stage. This also improves the lens durability due to the reduction of interfaces as well as the adhesion of the overall coating stack.

Irradiation is performed onto a spectacle lens or a surface of a spectacle lens, preferably on a surface of a spectacle lens surface, more preferably perpendicularly to the center of the surface of the spectacle lens.

By using irradiation as causing differences in terms of tinting, tinting with a small pattern can be also obtained. Preferably, irradiation can be implemented by a laser as defined in ISO 11145:2018, Section 3.19, and the smallest size of the tinting pattern corresponds to a beam diameter as defined in ISO 11145:2018(E), Section 3.3.1, of a laser in particular a beam diameter dᵤ(z) as defined in ISO 11145:2018(E), section 3.3.1, of a laser.

In the present invention, the irradiation step, which results in distinctive tinting properties between the preselected part of the surface irradiated and the part of the surface not irradiated, is completed before providing a tinting solution to the spectacle lens. As a result, the present method has no disadvantages caused when using a physical mask, such as liquid infiltration due to poor adhesion of the masking means. Further, since the selective tinting is achieved by distinctive properties of the respective parts of the surface of the spectacle lens, the tinting quality produced during the tinting step will not be affected by either masking or a physical mask (but rather by the irradiation parameters) contrary to the prior art where the tinting quality depends on the adhesion or the quality of the masking means.

After the completion of the present invention, the preselected part will be less tinted than the other parts or not tinted at all. The phrase that a part is "less tinted" means that the part (preselected part) uptakes smaller amount of tinting solution compared to the other parts (non-preselected parts). In one embodiment, the difference in terms of light transmittance of the preselected part and the non-preselected part can be in a range between 5% and 95%, preferably 10% to 90%.

In one embodiment, the present method may further comprise a step of determining at least one irradiation parameter for irradiating a preselected part of a surface of a spectacle lens substrate to obtain the desired tinting characteristics of the spectacle lens. This step takes place before selectively irradiating a preselected part.

In a further embodiment, the irradiation parameters are determined in consideration of a 3D surface pattern (base curve and curvature) of a spectacle lens.

A desired tinting can be obtained by determining at least one irradiation parameter for irradiating a preselected part. The term "irradiation parameter" refers to any parameter concerning irradiation which may affect the surface property of a spectacle lens substrate. The irradiation parameter may comprise, but not limited thereto, at least one selected from the group consisting of power of irradiation, scanning speed of irradiation, exposure time, pulse frequency of irradiation, height of irradiation from the spectacle lens, (focus of irradiation) and number of repetitions of irradiation.

A preselected part can be at least one preselected part. A plurality of preselected parts may be irradiated under the same or different irradiation parameters in view of the desired tinting pattern. That is, at least one preselected part can be irradiated under at least one irradiation condition defined by irradiation parameters. Different irradiation parameters will lead to different tinting. The uptake of the tinting solution by the surface of the spectacle lens is affected by the crosslink density of the surface changed by the irradiation and a certain crosslink density can be obtained by properly adjusting the amount of energy transferred to the surface by irradiation. By properly adjusting the irradiation parameters, the total amount of energy transferred by irradiation to the surface of the spectacle lens suitable for the desired tinting can be achieved. Therefore, any irradiation parameters that may affect the total amount of energy may be considered and fall within the definition of the term irradiation parameter. Generally, the higher the power of energy is, the less the spectacle lens surface is tinted.

Power of irradiation refers to total energy of irradiation. Power of irradiation is defined by pulse parameters like frequency, peak intensity, envelope size of pulse, etc. Lower frequency, higher peak intensity and higher envelope size, respectively, provide higher power. Higher irradiation power results in the higher energy transfer to the lens surface, and thus results in higher cross-linking density and less tint uptake. As for laser, power can be understood as defined in ISO 11145:2018(E), section 3.13. In an exemplary embodiment of using a laser beam of 355nm, it is preferable that the power is within a range between 0 and 10W.

Scan speed of irradiation determines the time that a spectacle lens substrate is exposed to the irradiation source. Hence lower speed results in the longer exposure time to the irradiation. If scan speed is too slow, an excessive exposure to the irradiation will be inevitable and the spectacle lens surface will be damaged. To prevent the damage and deduce sufficiently distinct tinting pattern between the preselected part and non-preselected parts, the scan speed should be in the range of 1 to 12,000mm/s, more preferably 10 to 12,000mm/s, most preferably 50 to 12,000mm/s, in an exemplary embodiment of using a laser beam of 355nm.

Frequency of irradiation refers to the transfer of energy by radio waves which affects the time that a spectacle lens surface is exposed to the irradiation source. As frequency decreases, the number of pulses decreases, while the energy output per pulse increases. Lower frequency therefore results in the longer exposure time to the irradiation at a fixed time. If the frequency is too low, an excessive exposure will be required and may deteriorate the spectacle lens property. On the other hand, as frequency increases, the number of pulses increases, while the energy output per pulse decreases, leading to a shorter exposure time to the irradiation. Therefore, the frequency needs to be selected while balancing the lens property and the tinting quality. In an exemplary embodiment of using a laser beam of 355nm, the frequency should be in the range of 10 to 400kHz, more preferably 40 to 400kHz.

Height (Z) of the irradiation from the surface of the spectacle lens can affect the amount of energy transmitted by the irradiation. This can be also expressed with a focus of the irradiation source which defines whether the irradiation source is focused on a surface of a spectacle lens. Too close arrangement of the irradiation source may damage the spectacle lens surface. In an exemplary embodiment of using a laser beam of 355nm, it is preferred when the irradiation source is separated from a surface of a spectacle lens surface by equal to or greater than 2.00 mm.

Number of repetitions can also affect the energy transmitted by the irradiation. The more the irradiation is repeated, the higher energy will be transmitted to the lens. Although the number of repetitions will prolong the exposure time like the scan speed, it was found that the number of repetitions does not significantly affect the lens property compared to the scan speed. It appears that this is because during the repetition the lens is given a certain amount of time to recover its surface before another round of irradiation is started, whereas the scanning itself is applied without pause.

An irradiation parameter can be selected depending on the desired tinting pattern and in consideration of irradiation source and irradiation parameters. If a preselected part requires relatively less tint uptake, the irradiation parameters should be designed to allow higher energy to be transferred to the preselected part, whereas if a preselected part requires relatively more tint uptake, the irradiation parameters should be designed to allow lower energy to be transferred to the preselected part.

Furthermore, as different spectacle lens materials with different properties under different irradiation conditions will be combined within the scope of the invention, it is not possible to indicate a specific condition that can be used for all possible lens materials and all possible apparatus for irradiation. Still, a skilled person will be able to determine a set of suitable irradiation parameters based on the above basic principle and the following experimental examples.

In one embodiment, the preselected part may be (a) a first surface of a spectacle lens, for example, a front surface; (b) a second surface of a spectacle lens, for example, a back surface; or (c) both of the first and second surfaces of a spectacle lens. In case of (a), only the back surface of the corresponding preselected part will be fully tinted. In case of (b), only the front surface of the corresponding preselected part will be fully tinted. In case of (c), the first and second surfaces may face each other to provide a part of the spectacle lens with no tinting at all or with less tinting compared to (a) and (b).

After the irradiation, a tinting solution is provided at least to a surface of the spectacle lens. In one embodiment, the tinting solution can be provided to the entire surface of the spectacle lens, e.g., by immersing the spectacle lens into the tinting bath comprising a tinting solution so that the entire surface of the spectacle lens is immersed into the tinting bath. If a tinting solution should be applied to only on to a front surface or a back surface of a spectacle lens surface, the tinting solution may be provided to only any one of the front surface and the back surface. Further, a tinting solution may be provided in a way that a tint gradient is obtained, e.g., by immersing the spectacle lens into a tinting bath and removing it gradually from the bath such that the longer a part of the lens is exposed to the tint, the darker it becomes. As explained above, tint gradient can be also obtained by irradiating each of the preselected parts with different irradiation parameters.

Any tinting solution suitable for or known for tinting a spectacle lens can be used. For example, the tinting solution disclosed in US 20070294841 A1, EP 2 966 484 B1, or US 5453100 A can be used and incorporated herein by reference. In one embodiment, the tinting solution can be converted into tinting vapor. The tinting solution provides tinting on the part of the surface of the spectacle lens which was not irradiated. On the other hand, the tinting solution cannot tint or only can partially tint the preselected part of the surface of the spectacle lens which has been irradiated. This is due to the cross-linking on the surface of the spectacle lens substrate produced by irradiation. Cross-linking network formed on the spectacle lens substrate makes the tinting solution to slowly diffuse into the spectacle lens substrate or difficult to penetrate thereto.

In a preferred embodiment, the tinting solution is an aqueous tinting solution. The aqueous tinting solution was found to provide more effective and distinctive selective tinting pattern on the surface of the spectacle lens, due to its relatively higher reactivity to the part of the surface not irradiated as compared to the preselected part of surface which went through irradiation.

Further, the tinting solution comprises at least one dye. The dye only needs to be suitable for tinting a spectacle lens and not limited.

The tinting solution may further comprise a swelling agent (also referred to as an impregnating solvent). Generally, the swelling agent lets the dyes enter the surface of the spectacle lens to facilitate the dyeing process, however, after irradiation, the surface of the spectacle lens goes through property change and makes the swelling agent ineffective. The swelling agent of the present invention selectively functions on the part of surface of the spectacle lens not irradiated, but does not function at all or functions only partially at the preselected part of the surface of the spectacle lens selectively irradiated, by impregnating thereto. Therefore, the swelling agent further results in more distinct tinting on the part of the surface of the spectacle lens not irradiated. The chosen swelling agent may depend in part on the type of lens material. Exemplary agents include glycol ethers such as dipropylene glycol monomethyl ether (DPM), tripropylene glycol monomethyl ether (TPM), and propylene glycol monomethyl ether (PM); alcohols such as glycol, aromatic alcohol, non-aromatic alcohol, etc.; and/or aromatic compounds such as xylene, toluene, benzene, etc. It was found that alcohols as swelling agent provide the most selective tinting after irradiation, more preferably, aromatic alcohols such as o-phenylphenol, benzyl alcohol.

In another embodiment, the tinting solution may further comprise a moderating solvent. As the swelling agent attacks the surface of the spectacle lens and enables impregnation of the dye, the moderating solvent is blended with the swelling agent and acts as a diluent and wetting agent and reduces the aggressiveness of the swelling agent. The moderating solvent can be for example, propylene glycol (PG), 1,4 butane diol, or ethylene glycol monobutyl ether (EB).

The molar ratio between said dye and said swelling agent is not limited but preferably can vary from 0.01 mol% and 5.00 mol%, preferably between 0.05 mol% and 2.00 mol%.

In a further embodiment, the tinting solution may further comprise a surfactant and/or a buffer to facilitate the mixing of the solution and to further improve the impregnation of the dye into a surface of a spectacle lens. Said surfactant is not limited there to but, may comprise at least one selected from the group consisting of linear alkylbenzene sulfonates, lignin sulfonates, fatty alcohol ethoxylates, and alkylphenol ethoxylates. A buffer may be used to reduce the aggressiveness of the tinting solution or to adjust the pH. Examples of the buffer may comprise at least one selected from the group consisting of citric acid and acetic acid.

With this method, the tinting solution and pattern can be directly applied on an uncoated surface of a spectacle lens. Auxiliary layers such as primer layers or hydrophobic/oleophobic layers which are the prerequisites for the implementation of the prior art are not required. Thus, the method is easily applicable and cost-effective to implement.

The method of the present invention may further comprise a step of removing the tinting solution from a surface of a spectacle lens. Subsequently, the method of the present invention may further comprise the coating step after the tinting step, for example, AR or HC coating, mirror coating, photochromic coating, polarizing coating, top coating, etc.

According to a second aspect of the present invention, a data set stored on a computer-readable medium or carried by a data signal, the data set comprising at least one of the following data: (i) a virtual representation (i.e. analytical or numerical representation) of the spectacle lens according to the first aspect of the present invention where the representation of the spectacle lens is configured to be used for a selective tinting of the spectacle lens and (ii) data containing computer-readable instructions which, when executed by a computer, causes an apparatus suitable for irradiation and/or an apparatus suitable for providing a tinting solution to execute the method according to the first aspect is also provided.

In addition, a computer program comprising instructions which, when the program is executed by a computer, causes an apparatus suitable for irradiation and/or an apparatus suitable for providing a tinting solution to execute the method according the first aspect of the present invention are provided. Further, a computer-readable storage medium stored on the computer program and a data carrier signal carrying the computer program are provided.

Furthermore, a system suitable for applying a pattern on a surface of a spectacle lens is provided, which comprises
- an apparatus suitable for tinting the surface of the spectacle lens, and
- an apparatus suitable for irradiation

Lastly, the present method was able to obtain a CR39 spectacle lens with a sharp tinted pattern on a surface, which was not possible with the conventional technology. The present method provides for the first time a CR39 spectacle lens with a tinted pattern having the accuracy and precision on the size and shape. The tinted pattern may have a dimension between 25um to 100mm. The present lens is even more advantageous in that it does not comprise any additional layer necessary for the tinting.

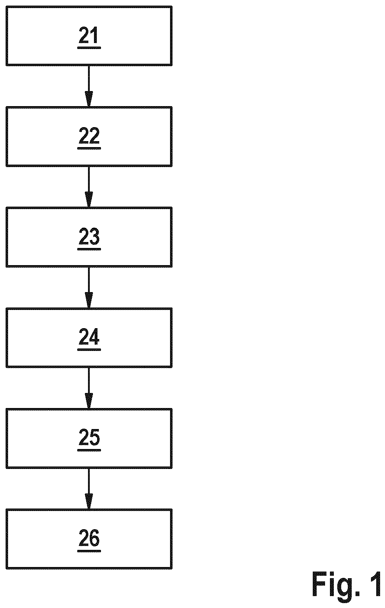

A flowchart of the instant method configured for tinting a spectacle lens according to the first aspect of the present invention is shown in Fig. 1. In a first step 21, a preselected part of a surface of a spectacle lens is selected in consideration of a desired tinting pattern. In other words, a part of the surface of the spectacle lens not desired to be tinted or desired to be less tinted compared to other parts is selected as the preselected part. The surface of the spectacle lens here can be a front surface, a back surface or both.

In a second step 22, irradiation conditions and parameters are set up according to the characteristics of the desired tinting pattern such as shape, gradient, tinting intensity, color, etc. There can be more than one irradiation conditions according to the number of the desired tinting pattern on the spectacle lens.

In a third step 23, the preselected part of the surface of the spectacle lens is irradiated using the irradiation parameters set up in the second step 22. If necessary, in view of the desired tinting pattern, the second step 22 and the third step 23 can be repeated with the same and/or different irradiation parameters.

In a fourth step 24, a tinting solution is provided. The lens will be immersed (partly or as a whole) into the tinting solution to obtain a desired tinting.

This fourth step 24 may further comprise reciprocating the lens in and out of the tinting solution for gradient tinting. In a case where a selective gradient tinting is desired, if a lens is immersed completely or partly in the tinting solution, then the lens is subsequently moved at least partially out of the tinting solution with a swinging movement in and out of the tinting solution to achieve the desired color degradation in terms of color hue and intensity.

In a fifth step 25, the tinting solution is removed from the surface of the spectacle lens and in a sixth step 26, which is an eventual and optional coating step, for example, AR or HC coatings, may take place as needed.

Hereinafter, preferable embodiments of the present invention will be described, however, the present invention is not limited to the embodiments.

### Example 1: Impact of irradiation parameters on tinting pattern

As a light irradiation source, a laser (manufactured by Keyence, product name: MD-U1000C) was used. Specifically, the laser is with YVO₄ medium and has a radiation wavelength of 355 nm, a marking resolution of 2 µm, and an output radiation of 3W/40kHz with a peak power 2.55W.

Laser power, laser scan speed, frequency, height of focus point of the laser from the substrate (Z) and repetition rate were varied to examine the effect of laser irradiation parameters on the tinting solution uptake of an uncoated spectacle lens substrate and the final transmittance of the lens substrate. CR39 (poly(allyl diglycol carbonate)) was used as the uncoated spectacle lens substrate.

### Laser power

| Sample-No.¤ | Substrate¤ | Z (mm)¤ | Laser power (%)¤ | Laser power (W)¤ | Speed (mm/s)¤ | Frequency (kHz)¤ | Repetition¤ | Energy/area-(J/cm²)^{a}·¤ |
|---|---|---|---|---|---|---|---|---|
| 1¤ | CR39·UV¤ | 2¤ | 50¤ | 1.3¤ | 500¤ | 40¤ | 4¤ | 6.7¤ |
| 2¤ | CR39·UV¤ | 2¤ | 75¤ | 1.9¤ | 500¤ | 40¤ | 4¤ | 9.8¤ |
| 3¤ | CR39·UV¤ | 2¤ | 100¤ | 2.55¤ | 500¤ | 40¤ | 4¤ | 13.25¤ |

| | | | | | | | | |
|---|---|---|---|---|---|---|---|---|
| ¤Energy = laser power (W) x scanning time (s) / area of exposure (cm²) | | | | | | | | |

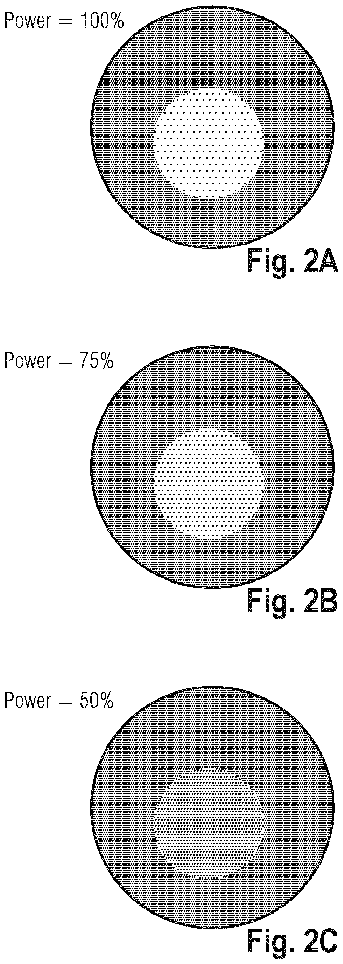

To examine how the laser power affects tinting, the laser was treated on the whole front surface of CR39 lens, changing the laser power from 50 to 100%, while keeping the other laser parameters constant. The lens was then put into a tinting bath, thereby immersing the entire front and back surfaces of the lens into the bath. As a result, higher laser power resulted in the higher energy transfer to the lens and hence higher cross-linking density and less tint uptake were obtained. The lens with less tint uptake showed lower transmittance as it is evident from Fig. 2A to 2C. Fig. 2A shows the lens substrate treated by a laser power of 100%, Fig. 2B by a laser power of 75%, and Fig. 2C by a laser power of 50%. It is confirmed that higher laser power leads to decreased tinting uptake. Visible tinting color difference between the preselected part and the non-preselected part was observed. No damage was found on the spectacle lens surface.

### Repetition number

| Sample name | Substrate | Z (mm) | Laser power (%) | Speed (mm/s) | Frequency (kHz) | Repetition |
|---|---|---|---|---|---|---|
| No. 1 | CR39 UV | 2 | 100 | 500 | 40 | 1 |
| No. 2 | CR39 UV | 2 | 100 | 500 | 40 | 6 |
| No. 3 | CR39 UV | 2 | 100 | 500 | 40 | 8 |
| No. 4 | CR39 UV | 2 | 100 | 500 | 40 | 16 |
| No. 5 | CR39 UV | 2 | 100 | 500 | 40 | 32 |

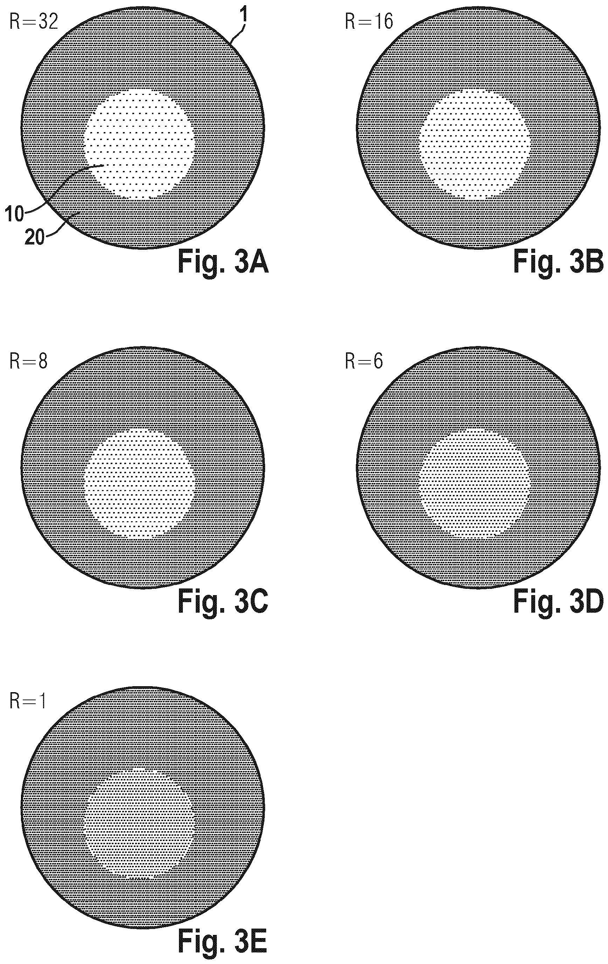

The effect of the repetition of the laser irradiation was tested by gradually increasing the repetition number while keeping the other parameters fixed. As noted from Fig. 3, the laser was treated on the front surface of CR39 lens with a circular pattern at the center increasing the number of repetitions from 1, 6, 8, 16 to 32. The samples of the lens were then put into a tinting bath, thereby immersing the entire front and back surfaces of the lens into the bath. It was found that as the number of repetition increases, the higher energy transfers to the lens surface and hence higher cross-linking density and less tint uptake were obtained. The lens with less tint uptake showed lower transmittance as can be apparently noted from Fig. 3A to 3E. Fig. 3A shows the lens substrate laser treated by 32 times, Fig. 3B by 16 times, Fig. 3C by 8 times, Fig. 3D by 6 times, and Fig. 3E by once. Fig. 3A which was treated by the laser by the highest number of repetitions of 32 times shows the least tinting uptake at the preselected circular part. On the other hand, Fig. 3E which was treated by the lowest number of repetitions of once resulted in the highest tinting uptake. The difference in terms of the tinting uptake would have been even clearer if the front surface alone was subjected to the tinting bath. Therefore, it is confirmed that the greater the number of repetitions of laser irradiation is, the less the tinting uptake occurs.

### Laser scan speed

It is understood that lower the scan speed of the laser speed would result in the longer exposure time of the laser. If the other laser parameters are fixed, the lower speed will result in the higher exposure time to the lens. The scan speed needs to be properly adjusted, otherwise the surface of the spectacle lens will be damaged.

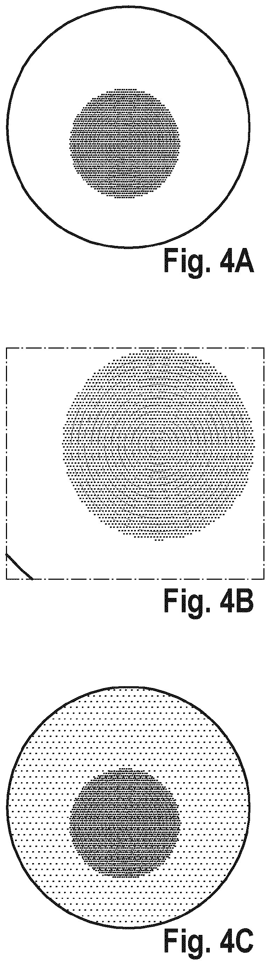

The lens shown in Fig. 4 was irradiated under the following condition: Z value = 0, laser power = 2.55W, scan speed = 50mm/s, 40 kHz frequency, and number of repetitions = 1. Compared to Fig. 2A, Z value has been adjusted so that the laser is more focused on the surface of the spectacle lens and the scan speed was reduced from 500 mm/s to 50mm/s. It was observed that unlike Figs. 2A, damages were caused on the surface of the spectacle lens. This shows that the lower scan speed can lead to higher energy transfer which leads to the lens damage (possibly, the more focused laser has also contributed to the damage).

### Height of focus point of the laser from the substrate (Z)

Height of focus point of the laser from a substrate (Z) refers to a distance between a laser focus and a spectacle lens. Z value also needs to be adjusted in consideration of other laser parameters considering possible damages that can be caused due to too extreme irradiation. If the laser is significantly defocused from the surface of the spectacle lens, the surface will not be significantly affected and thus no difference in terms of tinting degree will be resulted. On the other hand, if the laser is applied while being focused, higher energy will be transferred to the surface of the spectacle lens.

One of the main advantages of the present invention can be achieved by more delicately adjusting the height of focus point with regard to the curvature of the surface of the spectacle lens. By using an irradiation energy source such as a laser, the 3D pattern of a surface of a spectacle lens (i.e., base curve and curvature of the lens) can be taken into account and the irradiation can be implemented so that exactly the same pattern is achieved on the spectacle lenses with different 3D surface patterns or a desired pattern with high quality and accuracy is obtained.

For instance, in one embodiment, a laser beam can be set to be at the same focus point on each of the surface areas of a spectacle lens (Z value or height from the surface) regardless of the curvature and position on the surface areas on the spectacle lens. Hence the same energy can be delivered on the entire surface of the spectacle lens (from center to edge) which leads to a highly accurate and sharp pattern. As explained above with regard to the scan speed, some damages were observed as shown in Fig. 4 when Z is 0.00 mm caused. In contrast, no damages were caused in Fig. 2A where Z is set as 2.00mm while maintaining other conditions the same except for the scan speed. Specifically, Fig. 4A shows that the irradiated part in a circular form in the middle of the lens is damaged. Fig. 4B provides an enlarged view of the damaged part in Fig. 4B.

### Pulse frequency

As frequency decreases, the number of pulses decreases, while the energy output per pulse increases. On the other hand, as frequency increases, the number of pulses increases, while the energy output per pulse decreases. Therefore, generally, a lower pulse frequency will result in a longer exposure to the laser at a fixed time to deliver the same amount of energy to a spectacle lens substrate. If other laser parameters remain constant, a lower pulse frequency results in the higher exposure time of the spectacle lens substrate to the laser which would lead to less tinting uptake due to increased crosslinking density.

As can be seen from above, all the laser parameters affect one another and are dependent on one other. For example, a damage on the lens which is generated because of a high laser power could be avoided not only by reducing the laser power but also by adjusting the other parameters, for example, like by increasing Z or reducing repetition or increasing scan speed or increasing frequency.

At the end, it is understood that what determines the total amount of irradiation transferred to the surface of the spectacle lens determines the degree of crosslinking of the surface of the spectacle lens, which will lead to a variety of tinting patterns in the subsequent tinting step. It is clearly understood by a skilled person that increasing laser power, increasing repetition number, reducing Z, reducing scan speed and reducing pulse frequency result in increasing the amount of transferred energy and subsequently increasing crosslink density thereby prohibiting tinting uptake, and that excessive energy will cause damages on the surface of the spectacle lens, and vice versa.

To allow for selective tinting with distinctive tinting pattern having high quality, the irradiation parameters should be selected properly according to the teachings given above. A skilled person will be able to determine a set of suitable irradiation parameters according to a desired tinting pattern and a spectacle lens subject to tinting.

### Example 2: Irradiation on both front and back surfaces of the spectacle lens v. Irradiation only on front surface of the spectacle lens

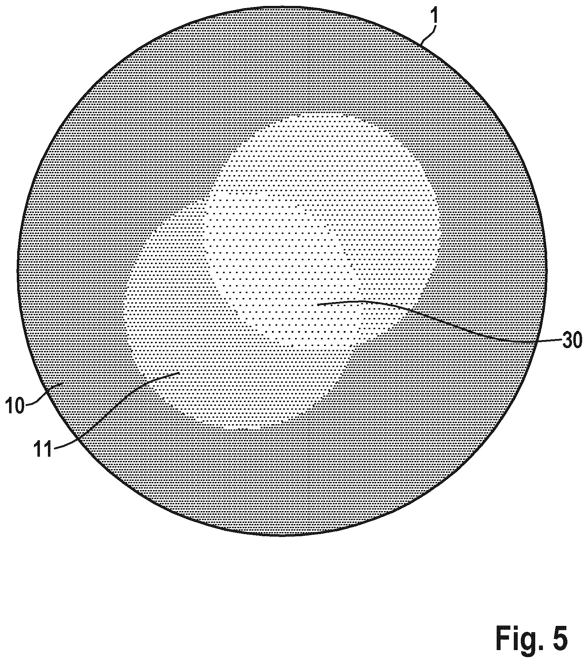

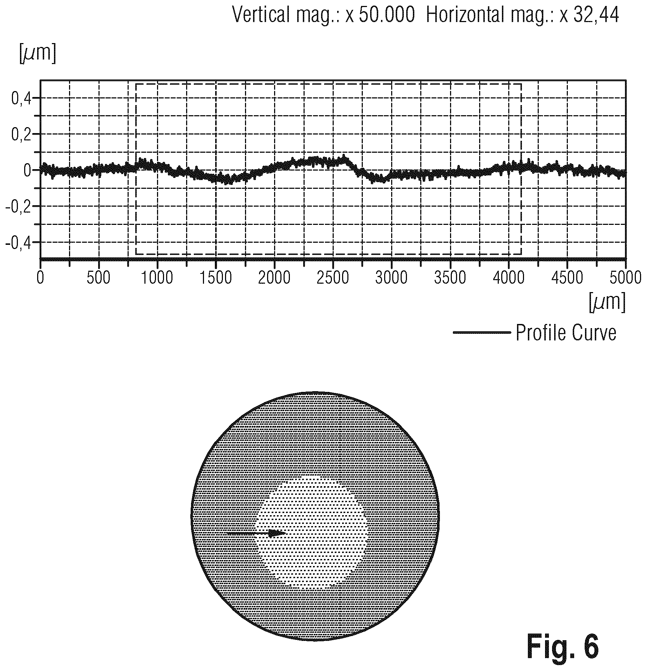

An uncoated CR39 spectacle lens was prepared. As shown in Fig. 5, a first preselected part 10 and a second preselected part 20 of the surface of the spectacle lens were selected so that the first 10 and the second 20 preselected parts partially overlap with each other and form an overlapping part 30. As for the first preselected part 10 having a circular shape, only the front surface of the spectacle lens was irradiated with a laser (manufactured by Keyence, product name: MD-U1000C) and as for the second preselected part 20 also having a circular shape, only the back surface of the spectacle lens was irradiated with the same laser, so that the overlapping part 30 of the surface is irradiated on both the front and back surfaces. For both cases, the laser irradiation was applied four times at a height (Z) of 4.00 mm with laser power 2.55W, scan speed of 500mm/s, pulse frequency of 40kHz.

In the subsequent tinting step, the entire spectacle lens including the front and back surfaces were immersed into a tinting bath. Tint uptake occurred from both front and back surfaces of the spectacle lens in the tinting bath, meaning that diffusion of tinting solution took place from back surface as well as the front surface. As both surfaces now have increased crosslinking density due to the laser irradiation, the tinting solution uptake is reduced from both front and back surfaces compared to the non-overlapping parts of the first preselected part 10 and the second preselected part 20. Consequently, the overlapping part 30 has reduced tint uptake from both front and back surface, and thus have the least tint uptake among the surface of the spectacle lens. The distinct tinting pattern between the parts where a single surface was exposed to irradiation 10, 20 and the part where both surfaces were exposed to irradiation 30 is evident as can be observed from Fig. 5 showing the obtained tinted spectacle lens. The irradiation on both front and back surfaces allows for obtaining more obvious and distinct tinting pattern.

### Example 3: Effect on the spectacle lens property - Profilometer measurement

Profilometer measurement was performed by SURFCOM NEX 040 (manufactured bz Accretech) with 2 µm diameter tip size, 0.6 mm/s scan speed, 5 mm scan length and ±2 mm Z range. The quality of the surface of the spectacle lens surface after the laser irradiation and tinting was examined.

An uncoated front surface of a CR39 spectacle lens was irradiated with a laser and then immersed into a tinting bath. The surface of the spectacle lens was irradiated with the laser used in the foregoing embodiments (manufactured by Keyence, product name: MD-U1000C) with the following conditions: Z value = 2, laser power = 2.55W, 500mm/s, 40 kHz frequency, and number of repetitions = 4. The thus-obtained tinted spectacle lens was subject to profilometer measurement. Profilometer is a surface topography test which probes the surface of the lens in 2D, x axis is the way on the surface and y axis is the height profile. Profilometers were measured across the two transmittance ranges on the surface of the spectacle lens where the spectacle lens surface which was fully tinted 50 and the preselected surface of the spectacle lens 10 which was irradiated and less tinted. A slight change on height between the two regimes 10, 50 of transmittance was observed but only on the interface between them around 2500 um and 3000um. The height remains the same in the two regimes 10, 50 (around 50-75 nm height to the surface of the lens, and 100-150 nm peak to valley height difference). This height difference at the interface of the fully tinted surface 10 and the less tinted surface 50 is not possible to distinguish with bare eyes and thus does not deteriorate the quality of the spectacle lens. It is confirmed that with the present method, a spectacle lens with a high-quality pattern can be easily obtained.

### Example 4: Sharp pattern on uncoated CR39 spectacle lens

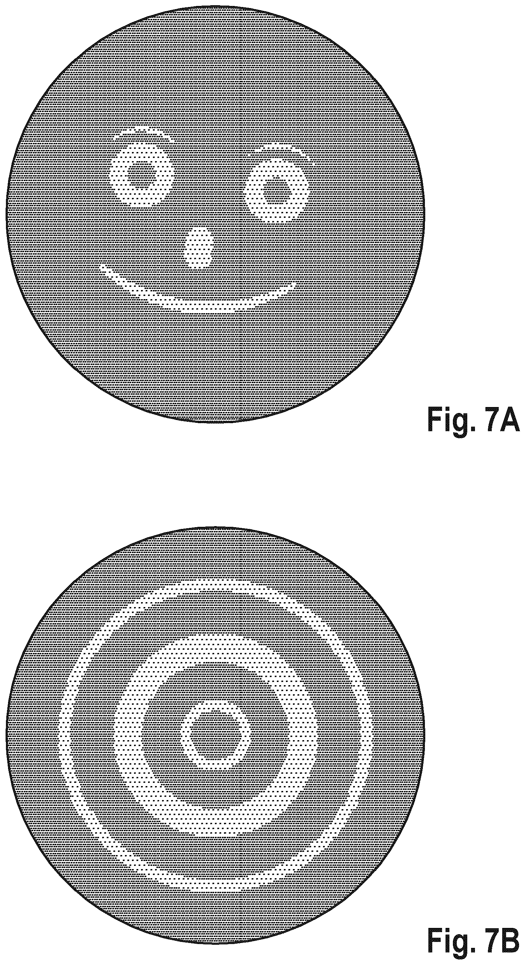

The present method was successful for the first time in obtaining an uncoated CR39 spectacle lens with a sharp tinting pattern without using any additional layer. As can be seen from Fig. 7, the present inventor successfully obtained a CR39 spectacle lens with a tinting pattern having a small dimension. Such a pattern with the accuracy and precision on the size and shape could not have been achieved by the conventional technology.

## Claims

1. A method configured for tinting a spectacle lens (1) by applying a tinting solution at least to a first area (50) of a surface the spectacle lens, wherein the surface of the spectacle lens comprises a second area (10) which has been subject to an irradiation, **characterized in that** at least the second area (10) of the surface of the spectacle lens having been uncoated when the irradiation is provided.

2. The method according to Claim 1, **characterized by** comprising the steps of
(i) irradiating a preselected part (10) of an uncoated surface of the spectacle lens, and
(ii) providing a tinting solution at least to a part of the surface of the spectacle lens which is not irradiated (50).

3. The method according to Claim 1 or 2,
**characterized in that** the preselected part (10) is less tinted than the part of the surface which is not irradiated (50).

4. The method according to any one of Claims 1 to 3,
**characterized by** further comprising a step of
determining irradiation parameters for irradiating the preselected part (10) of the surface of the spectacle lens to obtain the desired tinting characteristics of the spectacle lens.

5. The method according to any one of Claims 1 to 4,
**characterized in that** the irradiation parameters comprise at least one selected from the group consisting of the preselected part of the surface (10, 20) of the spectacle lens to be irradiated, power of irradiation, scan speed of irradiation, exposure time, pulse frequency of irradiation, height of irradiation from the surface of the spectacle lens, and number of repetitions of irradiation.

6. The method according to Claim 5,
**characterized in that** the height of irradiation from the surface of the spectacle lens is individually determined at each of the surface points according to the curvature of the spectacle lens.

7. The method according to any one of Claims 1 to 6,
**characterized in that** irradiating the preselected part of the surface (10, 20) of the spectacle lens is treating the preselected part of the surface of the spectacle lens by a laser.

8. The method according to any one of Claims 1 to 7,
**characterized in that** irradiating a preselected part (10, 20) of the surface of the spectacle lens is irradiating a preselected part (10) of a front surface and a preselected part (20) of a back surface of the spectacle lens.

9. The method according to Claim 8,
**characterized by** irradiating the front surface and the back surface of the spectacle lens on the preselected part (30) facing each other.

10. The method according to any one of Claims 1 to 9,
**characterized in that** the spectacle lens comprises poly (allyl diglycol carbonate).

11. A device configured to perform the method according to any one of Claims 1 to 10 and to determine irradiation parameters to obtain a desired tinting pattern on an uncoated surface of a spectacle lens,
**characterized in that** the irradiation parameters are determined to inhibit the preselected part (10, 20) of the uncoated surface of the spectacle lens which is irradiated from being fully tinted.

12. A computer program comprising instructions which, when the program is executed by a computer, cause an apparatus suitable for irradiating a preselected part (10, 20) of an uncoated surface of a spectacle lens to execute the method according to any one of Claims 1 to 10.

13. A computer-readable storage medium having stored on the computer program of Claim 12.

14. A CR39 spectacle lens comprising a tinted pattern on a surface, **characterized in that** the spectacle lens does not comprise an additional layer on the surface and the tinted pattern has a dimension between 25 µm and 100mm.

15. Use of irradiation on a preselected uncoated surface of a spectacle lens to inhibit the preselected uncoated surface from being fully tinted.
